# EUROPEAN PATENT APPLICATION

(11) **EP 4 665 019 A1**
(43) Date of publication of application: **17.12.2025**
(21) Application number: 23920341.7
(22) Date of filing: 06.02.2023
(51) Int. Cl.: H04W 64/00, H04W 24/10

(54) **FEEDBACK METHOD, APPARATUS, DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2023/074673
(87) International publication number: WO 2024/164126

(57) **Abstract**

Provided in the present disclosure are a feedback method, an apparatus, a device, and a storage medium. The method comprises: determining configuration information corresponding to each time point among M time points, wherein the configuration information is used for configuring a processing mode corresponding to each time point, and M is a positive integer; measuring a reference signal to be measured, so as to obtain an actual measurement value; on the basis of the configuration information, performing processing on the actual measurement values, which are on the M time points, so as to obtain signal processing results on the M time points; and feeding the signal processing results, which are on the M time points, back to a positioning server. By means of the method in the present disclosure, when a signal measurement node needs to feed back signal processing results on a plurality of time points, the signal processing result on each time point can be determined, such that successful feedback of the signal processing results is realized, thereby ensuring the stable execution of a positioning procedure.

## Description

### FIELD

The present disclosure relates to the field of communication technologies, and in particular, to a feedback method, an apparatus, a device and a storage medium.

### BACKGROUND

In New Radio (NR) systems, Artificial Intelligence (AI)-based positioning has been introduced to improve positioning accuracy. When performing positioning based on Al, a signal measurement node typically needs to feedback signal processing results at multiple time points to a positioning server, so that the positioning server can determine the required positioning location based on the signal processing results at these multiple time points. However, there is currently no method for determining the aforementioned signal processing results at multiple time points.

### SUMMARY

The present disclosure proposes a feedback method, apparatus, device, and storage medium.

In a first aspect, embodiments of the present disclosure provide a feedback method, including:
determining configuration information corresponding respectively to M time points, where the configuration information is used to configure processing methods corresponding respectively to the M time points, and M is a positive integer;
measuring a reference signal to be measured to obtain actual measurement values;
based on the configuration information, processing the actual measurement values at the M time points to obtain signal processing results at the M time points; and
feeding back the signal processing results at the M time points to a positioning server.

In the present disclosure, when a signal measurement node needs to feed back signal processing results at multiple time points, the method of the present disclosure can be used to determine the signal processing results at the time points, thereby achieving successful feedback of the signal processing results and ensuring stable execution of the positioning process.

In a second aspect, embodiments of the present disclosure provide a feedback method, including:
sending configuration information corresponding respectively to M time points to a signal measurement node, where the configuration information is used to configure processing methods corresponding respectively to the M time points, and M is a positive integer;
receiving signal processing results obtained at the M time points and fed back by the signal measurement node, where the signal processing results obtained respectively at the M time points are results obtained by the signal measurement node through processing actual measurement values at the M time points based on configuration information corresponding respectively to the M time points.

In a third aspect, embodiments of the present disclosure provide a communication apparatus, including:
a processing module, configured to determine configuration information corresponding respectively to M time points, where the configuration information is used to configure processing methods corresponding respectively to the M time points, and M is a positive integer;
the processing module is further configured to measure a reference signal to be measured to obtain actual measurement values;
the processing module is further configured to, based on the configuration information, process the actual measurement values at the M time points to obtain signal processing results at the M time points;
a transceiver module, configured to feed back the signal processing results at the M time points to a positioning server.

In a fourth aspect, embodiments of the present disclosure provide a communication apparatus, including:
a transceiver module, configured to send configuration information corresponding respectively to M time points to a signal measurement node, where the configuration information is used to configure processing methods corresponding respectively to the M time points, and M is a positive integer;
the transceiver module is further configured to receive signal processing results obtained at the M time points and fed back by the signal measurement node, where the signal processing results obtained respectively at the M time points are results obtained by the signal measurement node through processing actual measurement values at the M time points based on configuration information corresponding respectively to the M time points.

In a fifth aspect, embodiments of the present disclosure provide a communication apparatus, the communication apparatus includes a processor, where when the processor invokes a computer program in a memory, the method according to the first aspect or the second aspect is performed.

In a sixth aspect, embodiments of the present disclosure provide a communication apparatus, the communication apparatus includes a processor and a memory, where the memory stores a computer program; the processor executes the computer program stored in the memory to cause the communication apparatus to perform the method according to the first aspect or the second aspect.

In a seventh aspect, embodiments of the present disclosure provide a communication apparatus, the apparatus includes a processor and an interface circuit, the interface circuit is configured to receive a code instruction and transmit the code instruction to the processor, the processor is configured to run the code instruction to cause the apparatus to perform the method according to the first aspect or the second aspect.

In an eighth aspect, embodiments of the present disclosure provide a communication system, the system includes the communication apparatus according to any one of the third aspect to the fourth aspect, or the system includes the communication apparatus according to the fifth aspect, or the system includes the communication apparatus according to the sixth aspect, or the system includes the communication apparatus according to the seventh aspect.

In a ninth aspect, embodiments of the present disclosure provide a computer-readable storage medium, configured to store instructions used by the network device, where when the instructions are executed, the terminal is caused to perform the method according to the first aspect or the second aspect.

In a tenth aspect, the present disclosure further provides a computer program product including a computer program, where when the computer program runs on a computer, the computer is caused to perform the method according to the first aspect or the second aspect.

In an eleventh aspect, the present disclosure provides a chip system, the chip system includes at least one processor and an interface, configured to support a network device to implement functions involved in the method according to the first aspect or the second aspect, for example, determining or processing at least one of data and information involved in the above method. In a possible design, the chip system further includes a memory, the memory is configured to store necessary computer programs and data for the source secondary node. The chip system may be composed of chips, or may include chips and other discrete devices.

In a twelfth aspect, the present disclosure provides a computer program, where when the computer program runs on a computer, the computer is caused to perform the method according to the first aspect or the second aspect.

### BRIEF DESCRIPTION OF THE DRAWINGS

The above and/or additional aspects and advantages of the present disclosure will become apparent and readily appreciated from the following description of embodiments taken in conjunction with the drawings, where:
Fig. 1 is a schematic structural diagram of a communication system provided by an embodiment of the present disclosure;
Fig. 2 is a schematic flowchart of a feedback method provided by another embodiment of the present disclosure;
Fig. 3 is a schematic flowchart of a feedback method provided by another embodiment of the present disclosure;
Fig. 4 is a schematic flowchart of a feedback method provided by yet another embodiment of the present disclosure;
Fig. 5 is a schematic flowchart of a feedback method provided by yet another embodiment of the present disclosure;
Fig. 6 is a schematic flowchart of a feedback method provided by yet another embodiment of the present disclosure;
Fig. 7 is a schematic flowchart of a feedback method provided by yet another embodiment of the present disclosure;
Fig. 8 is a schematic flowchart of a feedback method provided by yet another embodiment of the present disclosure;
Fig. 9 is a schematic flowchart of a feedback method provided by yet another embodiment of the present disclosure;
Fig. 10 is a schematic structural diagram of a communication apparatus provided by another embodiment of the present disclosure;
Fig. 11 is a schematic structural diagram of a communication apparatus provided by another embodiment of the present disclosure;
Fig. 12 is a schematic structural diagram of a communication apparatus provided by an embodiment of the present application; and
Fig. 13 is a schematic structural diagram of a chip provided by an embodiment of the present disclosure.

### DETAILED DESCRIPTION

Here, exemplary embodiments will be described in detail, examples of which are illustrated in the drawings. When the following description refers to the drawings, unless otherwise indicated, the same numbers in different drawings denote the same or similar elements. The embodiments described in the following exemplary embodiments do not represent all implementations consistent with the embodiments of the present disclosure. On the contrary, they are merely examples of apparatuses and methods consistent with some aspects of the embodiments of the present disclosure as detailed in the appended claims.

The terms used in the embodiments of the present disclosure are for the purpose of describing particular embodiments only and are not intended to limit the embodiments of the present disclosure. The singular forms "a," "an," and "the" used in the embodiments of the present disclosure and the appended claims are also intended to include plural forms, unless the context clearly indicates otherwise. It should also be understood that the term "and/or" as used herein refers to and includes any or all possible combinations of one or more of the associated listed items.

It should be understood that although terms such as first, second, third, etc. may be used in the embodiments of the present disclosure to describe various information, such information should not be limited by these terms. These terms are only used to distinguish information of the same type from each other. For example, without departing from the scope of the embodiments of the present disclosure, first information may also be referred to as second information, and similarly, second information may also be referred to as first information. Depending on the context, the word "if' or "when" as used herein may be interpreted as "at the time of," "when," or "in response to determining."

The embodiments of the present disclosure are described in detail below, and examples of the embodiments are shown in the drawings, where the same or similar reference numerals throughout denote the same or similar elements. The embodiments described below with reference to the drawings are exemplary and are intended to explain the present disclosure and should not be construed as limiting the present disclosure.

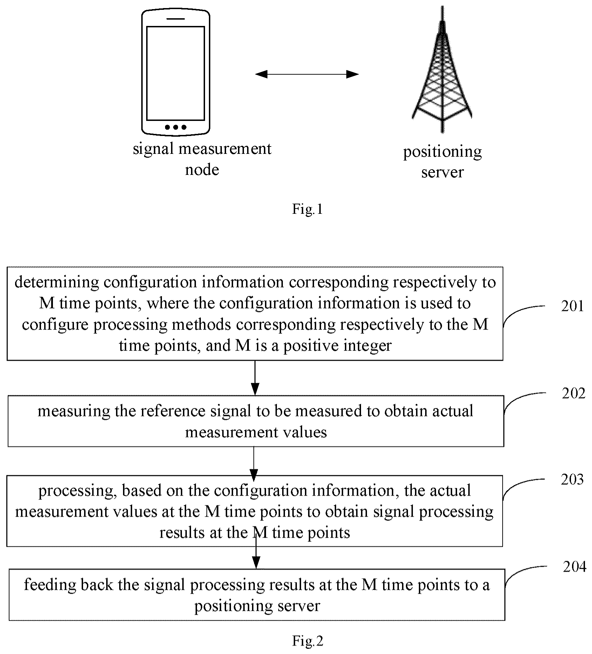

Please refer to Fig. 1. Fig. 1 is a schematic structural diagram of a communication system provided by an embodiment of the present disclosure. The communication system may include, but is not limited to, a signal measurement node and a positioning server, where the signal measurement node and the positioning server are different devices. The signal measurement node may be a terminal or a network device, and the positioning server may be a network device. Optionally, the number and forms of devices shown in Fig. 1 are for illustration only and do not constitute a limitation on the embodiments of the present disclosure. In practical applications, the system may include one or more signal measurement nodes, or one or more positioning servers. Optionally, the communication system shown in Fig. 1 takes, as an example, including one signal measurement node, which is a terminal, and one positioning server, which is a network device.

It should be noted that the technical solutions of the embodiments of the present disclosure may be applied to various communication systems. For example: long term evolution (LTE) system, fifth generation (5th generation, 5G) mobile communication system, 5G new radio (NR) system, or other future new mobile communication systems.

The terminal in the embodiments of the present disclosure may be an entity on the user side for receiving or transmitting signals, such as a mobile phone. The terminal may also be referred to as a terminal, user equipment (UE), mobile station (MS), mobile terminal (MT), etc. The terminal may be a car with communication function, a smart car, a mobile phone, a wearable device, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form adopted by the terminal.

The network device in the embodiments of the present disclosure may be an entity on the network side for transmitting or receiving signals. For example, the network device may be an evolved NodeB (eNB), a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the network device. The master node (MN) or secondary node (SN) provided in the embodiments of the present disclosure may be composed of a central unit (CU) and a distributed unit (DU), where the CU may also be called a control unit. Using the CU-DU structure, the protocol layers of a network device, such as a base station, can be split, with functions of some protocol layers placed in the CU for centralized control, and functions of the remaining or all protocol layers distributed in the DUs, controlled centrally by the CU.

It should be understood that the communication system described in the embodiments of the present disclosure is to explain the technical solutions of the embodiments of the present disclosure more clearly and does not constitute a limitation on the technical solutions provided by the embodiments of the present disclosure. Those skilled in the art should know that as the system architecture evolves and new service scenarios emerge, the technical solutions provided by the embodiments of the present disclosure are equally applicable to similar technical problems.

The feedback method, the apparatus, the device, and the storage medium provided by the embodiments of the present disclosure will be described in detail below with reference to the drawings.

It should be noted that, in the present disclosure, the feedback method provided by any one embodiment can be executed separately, any implementation manner in the embodiment can also be executed separately, or can be executed in combination with other embodiments or possible implementation methods in other embodiments, or can also be executed in combination with any technical solution in the related art.

Fig. 2 is a schematic flowchart of a feedback method provided by an embodiment of the present disclosure. The method is performed by a signal measurement node. As shown in Fig. 2, the feedback method may include the following steps:
Step 201: determining configuration information corresponding respectively to M time points, where the configuration information is used to configure processing methods corresponding respectively to the M time points, and M is a positive integer.

In one embodiment of the present disclosure, the method of the present disclosure may be applied to an AI positioning process.

In one embodiment of the present disclosure, the "M time points" may be time points corresponding to signal processing results that the signal measurement node needs to feed back to a positioning device. In other words, the "M time points" may indicate that the signal measurement node needs to feed back the signal processing results at these M time points to the positioning device.

In an embodiment of the present disclosure, the processing method may be a processing method used by the signal measurement node for the actual measurement values corresponding to each time point, and processing the actual measurement values corresponding to each time point based on the processing method corresponding to each time point may obtain the signal processing result at that time point. The actual measurement value corresponding to each time point may be a measurement value obtained by measuring the reference signal to be measured at each time point. The reference signal may be a positioning reference signal (PRS) or a sounding reference signal (SRS). In an embodiment of the present disclosure, the signal processing results at the M time points may be used to determine the positioning location of the device to be positioned to achieve positioning. The device to be positioned may be the signal measurement node, or may be the device that sends the reference signal.

In an embodiment of the present disclosure, the M time points may correspond to one piece of configuration information, which may be used to configure the processing methods corresponding to all time points in the M time points. In another embodiment of the present disclosure, the M time points may correspond to at least one piece of configuration information, where each piece of configuration information corresponds to at least one time point, and the configuration information may be used to configure the processing method corresponding to the corresponding time point.

In an embodiment of the present disclosure, the method for determining the configuration information may include at least one of the following:
receiving configuration information sent by the positioning server;
determining configuration information based on a protocol agreement;
determining configuration information based on a predefinition;
determining configuration information based on a pre-configuration.

In an embodiment of the present disclosure, the signal processing results may be values obtained by quantizing the actual measurement values; and, in one embodiment of the present disclosure, the configuration information may include:
quantization intervals corresponding to the M time points, where each time point corresponds to at least one quantization interval;
quantization results corresponding respectively to the quantization intervals.

Optionally, the quantization intervals corresponding to the M time points and the quantization results corresponding respectively to the quantization intervals may define the processing methods for the actual measurement values at respective time points. Specifically, the processing method for the actual measurement values at each time point may be: determining a target quantization interval to which the actual measurement value at a certain time point belongs, from the at least one quantization interval corresponding to that time point, and determining the quantization result corresponding to the target quantization interval as the signal processing result at that time point.

For example, Table 1 is a correspondence table between quantization intervals and quantization results included in a configuration information provided by an embodiment of the present disclosure.

**Table 1**

| Quantization Interval | Quantization Result |
|---|---|
| Signal measurement result < X | 000 |
| X ≤ Signal measurement result < X+Y | 001 |
| X+Y ≤ Signal measurement result < X+2Y | 010 |
| X+2Y ≤ Signal measurement result < X+3Y | 011 |
| X+3Y ≤ Signal measurement result < X+4Y | 100 |
| .... | .... |

It should be understood that Table 1 only exemplarily shows one correspondence between quantization intervals and quantization results; in actual operations, other possible quantization correspondences may also be used. Furthermore, each element in Table 1 exists independently; these elements are listed in the same table for illustrative purposes only, and it does not mean that all elements in the table must exist simultaneously as shown in the table. The value of each element is independent and does not depend on the value of any other element in Table 1. Therefore, those skilled in the art can understand that the value of each element in Table 1 is an independent embodiment.

As shown in Table 1, assuming that the correspondence between quantization intervals and quantization results corresponding to a certain time point is as shown in Table 1, then if the actual measurement value at that time point is greater than X+Y and less than X+2Y, the processing method corresponding to that time point can be determined as: determining 010 as the signal processing result at that time point.

In an embodiment of the present disclosure, configuration information corresponding to different time points may be the same, or configuration information corresponding to different time points may be different. For example, the interval lengths of quantization intervals corresponding to different time points may be the same or different, and the quantization results corresponding to quantization intervals at different time points may be the same or different. Optionally, the interval lengths of different quantization intervals in the at least one quantization interval corresponding to the same time point may be the same or different.

In an embodiment of the present disclosure, when configuration information corresponding to different time points is different, an interval length of a quantization interval corresponding to a time point within a specific time range may be smaller than an interval length of a quantization interval corresponding to a time point outside the specific time range. Optionally, the specific time range may include a first path arrival time of the reference signal to be measured arriving at the signal measurement node (i.e., the first path arrival time). The specific time range can be understood as: the time near the first path arrival time of the reference signal to be measured arriving at the signal measurement node.

Furthermore, the reason why "the interval length of the quantization interval corresponding to the time point within the specific time range is smaller than the interval length of the quantization interval corresponding to the time point outside the specific time range" is introduced below.

Specifically, as can be seen from the foregoing, the determination process of the signal processing results at the M time points is: measuring the received reference signal at the M time points to obtain signal measurement results, and then quantizing the signal measurement results at the M time points to obtain the signal processing results at the M time points. In addition, these signal processing results at the M time points are mainly used for subsequent determination of the positioning location of the device to be positioned to achieve positioning. It should be understood that for the signal measurement node, there may be noise signals before it starts receiving the reference signal and after it finishes receiving the reference signal. Moreover, in the subsequent positioning process, precise positioning is mainly achieved based on the signal processing results corresponding to the reference signal (i.e., the effective signal), while the signal processing results corresponding to the noise signal may not achieve precise positioning. Therefore, it is necessary to ensure that the signal processing results corresponding to the reference signal are more accurate, for example, to ensure that the signal processing results corresponding to the reference signal are closer to the signal measurement results before quantization, so as to achieve subsequent precise positioning.

Based on this, according to the present disclosure, the first path arrival time of the reference signal to be measured arriving at the signal measurement node is included within a specific time range, so that the specific time range includes the time when the signal measurement node receives the reference signal. Thus, the time points within the specific range can be approximately considered as the time points when the signal measurement node receives the reference signal, and the time points located outside the specific range can be approximately considered as the time points when the signal measurement node does not receive the reference signal (e.g., the time when the signal measurement node receives the noise signal). At the same time, the interval length of the quantization interval corresponding to the time point within the specific time range is made smaller than the interval length of the quantization interval corresponding to the time point outside the specific time range. That is, the quantization granularity of the processing method corresponding to the time point within the specific time range is made smaller, and the quantization granularity of the processing method corresponding to the time point outside the specific time range is made larger. This ensures the quantization accuracy of the signal measurement results at the time points within the specific time range, so that the signal processing results obtained after quantization processing at the time points within the specific time range are closer to the signal measurement results before quantization processing. That is, it ensures that the signal processing results corresponding to the reference signal are more accurate, thereby ensuring that subsequent precise positioning can be achieved based on the signal processing results at the M time points. At the same time, by making the quantization granularity of the signal measurement results at time points outside the specific range larger, quantization complexity can be reduced and quantization efficiency can be improved.

Step 202: measuring the reference signal to be measured to obtain actual measurement values.

Step 203: processing, based on the configuration information, the actual measurement values at the M time points to obtain signal processing results at the M time points.

**In** an embodiment of the present disclosure, the "processing, based on the configuration information, the actual measurement values at the M time points to obtain signal processing results at the M time points" may include: determining, from the quantization intervals corresponding to the M time points, target quantization intervals to which the actual measurement values at the M time points respectively belong; determining the quantization results corresponding respectively to the target quantization intervals as the signal processing results at the M time points respectively. For details on this part, please refer to the detailed introduction of Table 1 in the foregoing step 201.

Step 204: feeding back the signal processing results at the M time points to a positioning server.

In an embodiment of the present disclosure, by feeding back the signal processing results at the M time points to the positioning server, the positioning server can determine the positioning location of the device to be positioned based on the signal processing results at the M time points, thereby achieving precise positioning. The device to be positioned may be the aforementioned signal measurement node, or it may be the device that sends the reference signal.

In summary, according to the feedback method provided by the embodiments of the present disclosure, the signal measurement node determines configuration information corresponding respectively to the M time points, where the configuration information is used to configure processing methods corresponding respectively to the M time points, and M is a positive integer. In addition, the signal measurement node measures the reference signal to be measured to obtain actual measurement values, processes the actual measurement values at the M time points based on the configuration information to obtain signal processing results at the M time points, and then feeds back the signal processing results at the M time points to the positioning server. Therefore, when the signal measurement node needs to feed back signal processing results at multiple time points, the method of the present disclosure can be used to determine the signal processing results at respective time points, thereby achieving successful feedback of the signal processing results and ensuring stable execution of the positioning process.

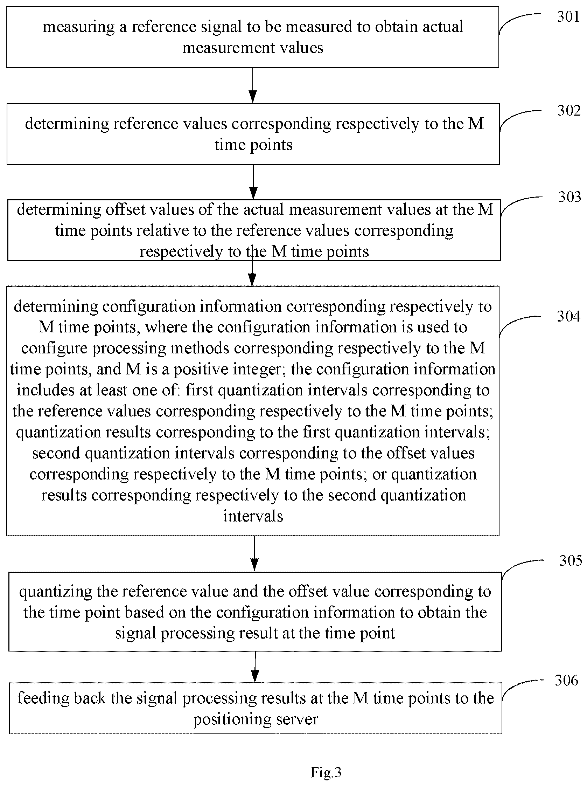

Fig. 3 is a schematic flowchart of a feedback method provided by an embodiment of the present disclosure. The method is performed by a signal measurement node. As shown in Fig. 3, the feedback method may include the following steps:
Step 301: measuring a reference signal to be measured to obtain actual measurement values.
Step 302: determining reference values corresponding respectively to the M time points.

In an embodiment of the present disclosure, the time points correspond respectively to reference values, and at least two of the time points correspond to the same reference value.

In an embodiment of the present disclosure, determining the reference values corresponding respectively to the M time points may include: the signal measurement node autonomously determining and/or determining based on transmission from the positioning server which time points correspond to the same reference value; the signal measurement node assigns reference values to time points that correspond to the same reference value respectively.

For example, assume M is 3, and the signal measurement node autonomously determines that the first time point and the second time point correspond to the same reference value. Then, the signal measurement node can assign the same reference value to the first time point and the second time point, while assigning reference values different from the first and second time points to the third time point.

In another embodiment of the present disclosure, determining the reference values corresponding respectively to the M time points may include: determining the reference values corresponding respectively to the M time points based on a transmission from the positioning server.

Step 303: determining offset values of the actual measurement values at the M time points relative to the reference values corresponding respectively to the M time points.

For example, suppose the reference value corresponding to a certain time point is A, and the actual measurement value at that time point is B. Then the offset value corresponding to that time point is: B-A or A-B.

Step 304: determining configuration information corresponding respectively to M time points, where the configuration information is used to configure processing methods corresponding respectively to the M time points, and M is a positive integer; the configuration information includes at least one of: first quantization intervals corresponding to the reference values corresponding respectively to the M time points, where each reference value corresponds to at least one first quantization interval; quantization results corresponding to the first quantization intervals; second quantization intervals corresponding to the offset values corresponding respectively to the M time points, where each offset value corresponds to at least one second quantization interval; or quantization results corresponding respectively to the second quantization intervals.

In an embodiment of the present disclosure, an interval length of a first quantization interval and an interval length of a second quantization interval corresponding to a same time point are the same or different; interval lengths of first quantization intervals corresponding to reference values of different time points are the same or different; and interval lengths of second quantization intervals corresponding to offset values of different time points are the same or different.

The functions of the first quantization interval and the second quantization interval, as well as the functions of the quantization results corresponding to the first quantization interval and the quantization results corresponding to the second quantization interval, can be referred to in the relevant introduction of Table 1 above.

Step 305: quantizing the reference value and the offset value corresponding to the time point based on the configuration information to obtain the signal processing result at the time point.

In an embodiment of the present disclosure, the "quantizing the reference value and the offset value corresponding to the time point based on the configuration information" may include:
Step a: quantizing the reference values corresponding respectively to the M time points based on the first quantization intervals and the quantization results corresponding respectively to the first quantization intervals; optionally, determining, from at least one the first quantization interval corresponding respectively to reference values corresponding respectively to the M time points, target quantization intervals to which the reference values at the M time points respectively belong, and determining the quantization results corresponding respectively to the target quantization intervals as the quantized results of the reference value at the M time points respectively.
Step b: quantizing the offset values corresponding respectively to the M time points based on the second quantization intervals and the quantization results corresponding respectively to the second quantization intervals; optionally, determining, from at least one the second quantization interval corresponding respectively to offset values corresponding respectively to the M time points, target quantization intervals to which the offset values at the M time points respectively belong, and determining the quantization results corresponding respectively to the target quantization intervals as the quantized results of the offset value at the M time points respectively;
Step c: determining the quantized result of the reference values corresponding respectively to the M time points and/or the quantized result of the offset values corresponding respectively to the M time points as the processing results at the time point respectively.
Step 306: feeding back the signal processing results at the M time points to the positioning server.

In an embodiment of the present disclosure, by feeding back the signal processing results at the M time points to the positioning server, the positioning server can determine the positioning location of the device to be positioned based on the signal processing results at these M time points, thereby achieving precise positioning. The device to be positioned can be the aforementioned signal measurement node, or the device to be positioned can also be the device sending the reference signal.

In an embodiment of the present disclosure, when the signal measurement node autonomously determines in step 302 which time points correspond to the same reference value, the signal measurement node can also send indication information to the positioning server, where the indication information can indicate which time points correspond to the same reference value.

In another embodiment of the present disclosure, when the signal measurement node determines the reference values corresponding respectively to the M time points based on transmission from the positioning server in step 302, the signal processing results fed back by the signal measurement node to the positioning server in step 306 can include only the quantized results of the offset values corresponding respectively to the M time points.

In summary, in the feedback method provided by the embodiments of the present disclosure, the signal measurement node determines configuration information corresponding respectively to the M time points, where the configuration information is used to configure processing methods corresponding respectively to the M time points, and M is a positive integer. and the signal measurement node measures the reference signal to be measured to obtain actual measurement values, and processes the actual measurement values at the M time points based on the configuration information to obtain signal processing results at the M time points, and then feeds back the signal processing results at the M time points to the positioning server. Therefore, when the signal measurement node needs to feed back signal processing results at multiple time points, the method of the present disclosure can be used to determine the signal processing results at the time points respectively, thereby achieving successful feedback of the signal processing results and ensuring stable execution of the positioning process.

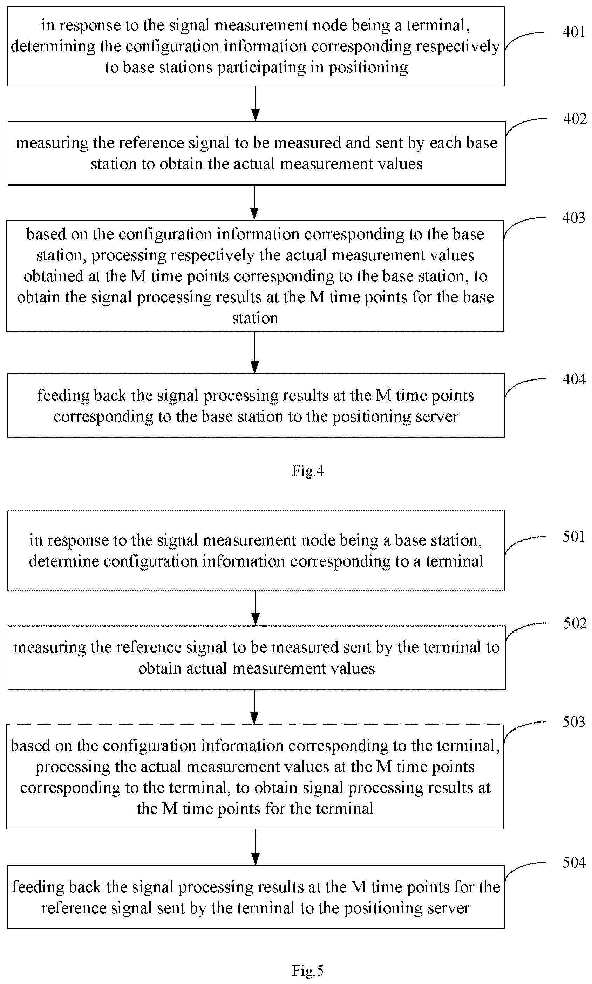

FIG. 4 is a schematic flowchart of a feedback method provided by an embodiment of the present disclosure. The method is performed by a signal measurement node. As shown in FIG. 4, the feedback method can include the following steps:
Step 401, in response to the signal measurement node being a terminal, determining the configuration information corresponding respectively to a base station participating in positioning.

In an embodiment of the present disclosure, a positioning process (such as an AI positioning process) usually involves a terminal and multiple base stations participating in positioning. The device to be positioned can be the terminal or any base station among the multiple base stations, the signal measurement node can be the terminal, or the signal measurement node can also be each base station. Optionally, when the signal measurement node is the terminal, each base station can send a reference signal (e.g., send a PRS) to the terminal, so that the terminal can measure and process the reference signals sent by each base station.

In an embodiment of the present disclosure, when the signal measurement node is a terminal, the terminal can determine configuration information corresponding to each base station, where the configuration information is used to configure the processing methods for the actual measurement values of the reference signal sent by the base station at each time point among the M time points corresponding to the base station, then the terminal can subsequently process the actual measurement values at the M time points corresponding to the reference signal sent by each base station based on the configuration information corresponding to each base station.

In an embodiment of the present disclosure, one base station can correspond to one piece of configuration information, and this one piece of configuration information can be used to configure the processing methods corresponding respectively to all time points of the M time points corresponding to the base station.

For example, assuming that when the signal measurement node is a terminal, the base stations participating in positioning are base station #1, base station #2, and base station #3, the terminal can determine configuration information #1 corresponding to base station #1, configuration information #2 corresponding to base station #2, and configuration information #3 corresponding to base station #3, where configuration information #1 is used to configure the processing methods for the actual measurement values at the M time points respectively corresponding to the reference signal sent by base station #1, configuration information #2 is used to configure the processing methods for the actual measurement values at the M time points respectively corresponding to the reference signal sent by base station #2, and configuration information #3 is used to configure the processing methods for the actual measurement values at the M time points respectively corresponding to the reference signal sent by base station #3.

In another embodiment of the present disclosure, one base station can correspond to at least one piece of configuration information, each piece of configuration information can correspond to at least one time point, and the configuration information can be used to configure the processing method corresponding to the corresponding time point.

For example, assuming that when the signal measurement node is a terminal, the base station participating in positioning is base station #1, and the M time points corresponding to base station #1 are: time point #1, time point #2, time point #3, ..., time point #M. Then, this base station can correspond to configuration information #1, configuration information #2, configuration information #3, ..., configuration information #M, where configuration information #1 corresponds to time point #1 and can be used to configure the processing method for the actual measurement value of the reference signal sent by base station #1 at time point #1, configuration information #2 corresponds to time point #2 and can be used to configure the processing method for the actual measurement value of the reference signal sent by base station #1 at time point #2, configuration information #3 corresponds to time point #3 and can be used to configure the processing method for the actual measurement value of the reference signal sent by base station #1 at time point #3, and configuration information #M corresponds to time point #M and can be used to configure the processing method for the actual measurement value of the reference signal sent by base station #1 at time point #M.

In an embodiment of the present disclosure, the M time points corresponding to different base stations can be the same or different. The configuration information corresponding to different base stations can be the same or different. For example, the interval lengths of quantization intervals in the configuration information corresponding to different base stations can be the same or different, and/or the quantization results corresponding to the quantization intervals in the configuration information corresponding to different base stations can be the same or different. The processing methods corresponding to different time points of the same base station can also be the same or different.

In an embodiment of the present disclosure, when quantizing the actual measurement values at the time points respectively based on the reference values corresponding respectively to the time points, the reference values corresponding to same time points of different base stations are the same or different, and the reference values corresponding to different time points of the same base station are the same or different.

In addition, other detailed introductions about the configuration information can refer to the description in the foregoing embodiments.

Step 402: measuring the reference signal to be measured and sent by each base station to obtain the actual measurement values.

Step 403: based on the configuration information corresponding to the base station, processing respectively the actual measurement values obtained at the M time points corresponding to the base station, to obtain the signal processing results at the M time points for the base station.

For example, assuming the base stations participating in positioning are base station #1, base station #2, and base station #3, base station #1 corresponds to configuration information #1, base station #2 corresponds to configuration information #2, and base station #3 corresponds to configuration information #3, the terminal can process the actual measurement values at the M time points corresponding to the reference signal sent by base station #1 based on configuration information #1, process the actual measurement values at the M time points corresponding to the reference signal sent by base station #2 based on configuration information #2, and process the actual measurement values at the M time points corresponding to the reference signal sent by base station #3 based on configuration information #3.

Step 404: feeding back the signal processing results at the M time points corresponding to the base station to the positioning server.

In an embodiment of the present disclosure, by feeding back the signal processing results at the corresponding M time points for the reference signals sent by each base station to the positioning server, the positioning server can determine the positioning location of the device to be positioned based on the signal processing results at the corresponding M time points for the reference signals sent by each base station, thereby achieving precise positioning. The device to be positioned can be the aforementioned terminal serving as the signal measurement node, or the device to be positioned can also be any base station.

In summary, in the feedback method provided by the embodiments of the present disclosure, the signal measurement node determines configuration information corresponding respectively to M time points, where the configuration information is used to configure the processing methods corresponding respectively to the M time points and M is a positive integer, and the signal measurement node measures the reference signal to be measured to obtain actual measurement values, and processes the actual measurement values at the M time points based on the configuration information to obtain signal processing results at the M time points, and then feeds back the signal processing results at the M time points to the positioning server. Therefore, when the signal measurement node needs to feed back signal processing results at multiple time points, the method of the present disclosure can be used to determine the signal processing results at each time point, thereby achieving successful feedback of the signal processing results and ensuring stable execution of the positioning process.

FIG. 5 is a schematic flowchart of a feedback method provided by an embodiment of the present disclosure. The method is performed by a signal measurement node. As shown in FIG. 4, the feedback method can include the following steps:
Step 501: in response to the signal measurement node being a base station, determine configuration information corresponding to a terminal.

In an embodiment of the present disclosure, a positioning process (such as an AI positioning process) usually involves a terminal and multiple base stations participating in positioning. The device to be positioned can be the terminal or any base station among the multiple base stations, the signal measurement node can be the terminal, or the signal measurement node can also be each base station. Optionally, when the signal measurement node is a base station, the terminal can send a reference signal (e.g., send an SRS) to each base station, so that each base station can measure and process the reference signal sent by the terminal.

In an embodiment of the present disclosure, when the signal measurement node is a base station, the base station can determine configuration information corresponding to the terminal, where the configuration information is used to configure the processing methods for the actual measurement values of the reference signal sent by the terminal at the M time points corresponding to the terminal. Then, the base station can subsequently process the actual measurement values at the M time points corresponding to the reference signal sent by the terminal based on the configuration information.

In an embodiment of the present disclosure, the terminal can correspond to one piece of configuration information, and this one piece of configuration information can be used to configure the processing methods corresponding to all time points among the M time points corresponding to the terminal.

In another embodiment of the present disclosure, the terminal can correspond to at least one piece of configuration information, each piece of configuration information may correspond to at least one time point, and the configuration information can be used to configure the processing method corresponding to the corresponding time point.

In addition, other detailed introductions about the configuration information can refer to the description in the foregoing embodiments.

Step 502: measuring the reference signal to be measured sent by the terminal to obtain actual measurement values.

Step 503: based on the configuration information corresponding to the terminal, processing the actual measurement values at the M time points corresponding to the terminal, to obtain signal processing results at the M time points for the terminal.

Step 504: feeding back the signal processing results at the M time points for the reference signal sent by the terminal to the positioning server.

In an embodiment of the present disclosure, by feeding back the signal processing results at the M time points for the reference signal sent by the terminal to the positioning server, the positioning server can determine the positioning location of the device to be positioned based on the signal processing results at the M time points for the reference signal sent by the terminal fed back by each base station, thereby achieving precise positioning. The device to be positioned can be any base station participating in the positioning mentioned above, or the device to be positioned can also be the terminal.

In summary, in the feedback method provided by the embodiments of the present disclosure, the signal measurement node determines configuration information corresponding respectively to M time points, where the configuration information is used to configure the processing methods corresponding respectively to the M time points, and M is a positive integer, and the signal measurement node measures the reference signal to be measured to obtain actual measurement values, and processes the actual measurement values at the M time points based on the configuration information to obtain signal processing results at the M time points; and then feeds back the signal processing results at the M time points to the positioning server. Therefore, when the signal measurement node needs to feed back signal processing results at multiple time points, the method of the present disclosure can be used to determine the signal processing results at each time point, thereby achieving successful feedback of the signal processing results and ensuring stable execution of the positioning process.

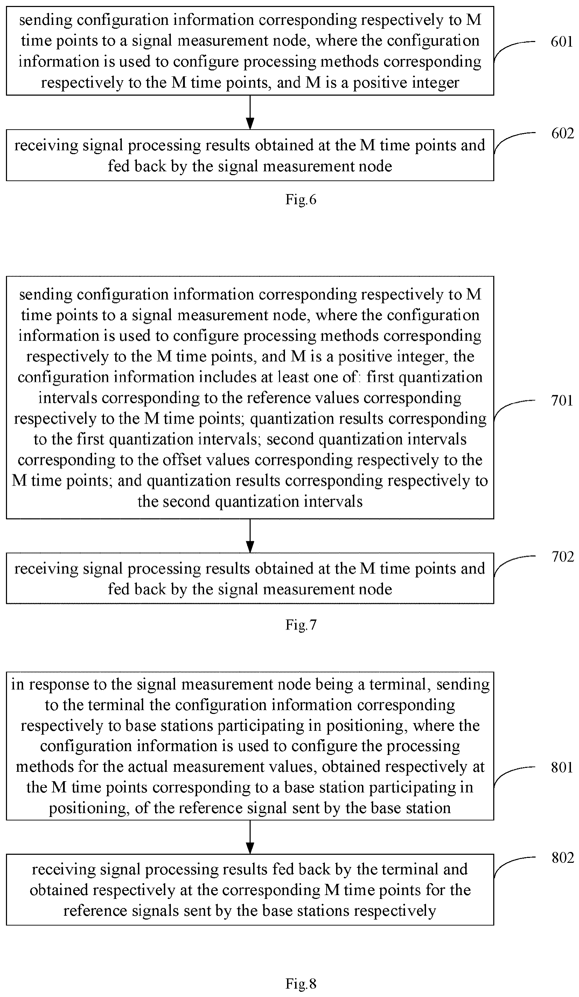

FIG. 6 is a schematic flowchart of a feedback method provided by an embodiment of the present disclosure. The method is performed by a positioning server. As shown in FIG. 6, the feedback method can include the following steps:
Step 601: sending configuration information corresponding respectively to M time points to a signal measurement node, where the configuration information is used to configure processing methods corresponding respectively to the M time points, and M is a positive integer.
Step 602: receiving signal processing results obtained at the M time points and fed back by the signal measurement node, where the signal processing results obtained respectively at the M time points are results obtained by the signal measurement node through processing actual measurement values at the M time points based on configuration information corresponding respectively to the M time points.
where detailed descriptions of steps 601-602 can refer to the description in the foregoing embodiments.

In summary, in the feedback method provided by the embodiments of the present disclosure, the positioning server sends configuration information corresponding respectively to M time points to the signal measurement node, where the configuration information is used to configure the processing methods corresponding respectively to M time points, and M is a positive integer, and the signal measurement node measures the reference signal to be measured to obtain actual measurement values, and processes the actual measurement values at the M time points based on the configuration information to obtain signal processing results at the M time points; and then feeds back the signal processing results at the M time points to the positioning server. Therefore, when the signal measurement node needs to feed back signal processing results at multiple time points, the method of the present disclosure can be used to determine the signal processing results at each time point, thereby achieving successful feedback of the signal processing results and ensuring stable execution of the positioning process.

FIG. 7 is a schematic flowchart of a feedback method provided by an embodiment of the present disclosure. The method is performed by a positioning server. As shown in FIG. 7, the feedback method can include the following steps:
Step 701: sending configuration information corresponding respectively to M time points to a signal measurement node, where the configuration information is used to configure processing methods corresponding respectively to the M time points, and M is a positive integer. The configuration information includes at least one of: first quantization intervals corresponding to the reference values corresponding respectively to the M time points, where each reference value corresponds to at least one first quantization interval; quantization results corresponding to the first quantization intervals; second quantization intervals corresponding to the offset values corresponding respectively to the M time points, wherein each offset value corresponds to at least one second quantization interval; and quantization results corresponding respectively to the second quantization intervals.
Step 702: receiving signal processing results obtained at the M time points and fed back by the signal measurement node.

Detailed descriptions of steps 701-702 can refer to the description in the foregoing embodiments.

In summary, in the feedback method provided by the embodiments of the present disclosure, the positioning server sends the configuration information corresponding respectively to M time points to the signal measurement node, where the configuration information is used to configure the processing methods corresponding respectively to M time points, and M is a positive integer, and the signal measurement node measures the reference signal to be measured to obtain actual measurement values, and processes the actual measurement values at the M time points based on the configuration information to obtain signal processing results at the M time points; and then feeds back the signal processing results at the M time points to the positioning server. Therefore, when the signal measurement node needs to feed back signal processing results at multiple time points, the method of the present disclosure can be used to determine the signal processing results at each time point, thereby achieving successful feedback of the signal processing results and ensuring stable execution of the positioning process.

FIG. 8 is a schematic flowchart of a feedback method provided by an embodiment of the present disclosure. The method is performed by a positioning server. As shown in FIG. 8, the feedback method can include the following steps:
Step 801: in response to the signal measurement node being a terminal, sending to the terminal the configuration information corresponding respectively to base stations participating in positioning, where the configuration information is used to configure the processing methods for the actual measurement values, obtained respectively at the M time points corresponding to a base station participating in positioning, of the reference signal sent by the base station.

The configuration information corresponding to different base stations may be the same or different.

Step 802: receiving signal processing results fed back by the terminal and obtained respectively at the corresponding M time points for the reference signals sent by the base stations respectively.

Detailed descriptions of steps 801-802 can refer to the description in the foregoing embodiments.

In summary, in the feedback method provided by the embodiments of the present disclosure, the positioning server sends the configuration information corresponding respectively to M time points to the signal measurement node, where the configuration information is used to configure the processing methods corresponding respectively to M time points, and M is a positive integer. and the signal measurement node measures the reference signal to be measured to obtain actual measurement values, and processes the actual measurement values at the M time points based on the configuration information to obtain signal processing results at the M time points; and then feeds back the signal processing results at the M time points to the positioning server. Therefore, when the signal measurement node needs to feed back signal processing results at multiple time points, the method of the present disclosure can be used to determine the signal processing results at each time point, thereby achieving successful feedback of the signal processing results and ensuring stable execution of the positioning process.

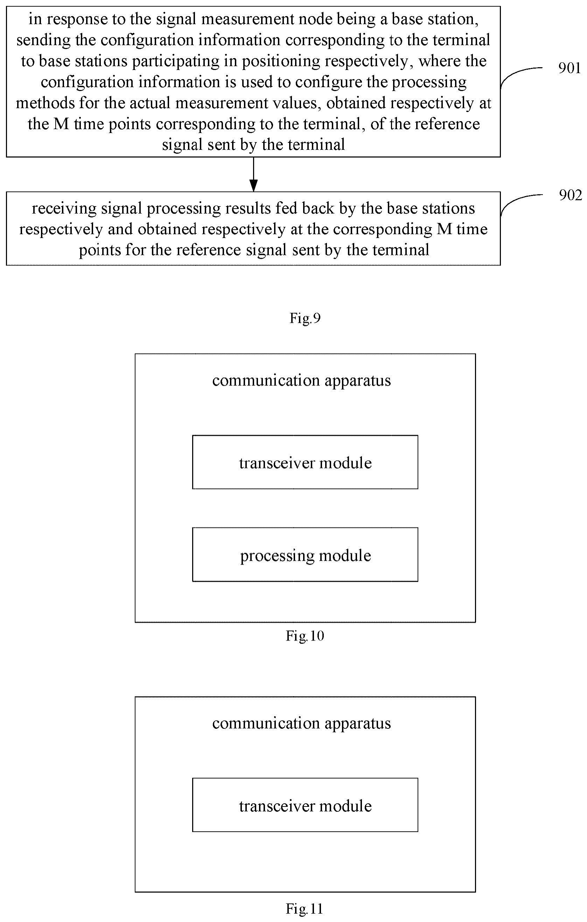

FIG. 9 is a schematic flowchart of a feedback method provided by an embodiment of the present disclosure. The method is performed by a positioning server. As shown in FIG. 9, the feedback method can include the following steps:
Step 901: in response to the signal measurement node being a base station, sending the configuration information corresponding to the terminal to base stations participating in positioning respectively, where the configuration information is used to configure the processing methods for the actual measurement values, obtained respectively at the M time points corresponding to the terminal, of the reference signal sent by the terminal.
Step 902: receiving signal processing results fed back by the base stations respectively and obtained respectively at the corresponding M time points for the reference signal sent by the terminal.
where detailed descriptions of steps 901-902 can refer to the description in the foregoing embodiments.

In summary, in the feedback method provided by the embodiments of the present disclosure, the positioning server sends configuration information corresponding respectively to M time points to the signal measurement node, where the configuration information is used to configure the processing methods corresponding respectively to M time points, and M is a positive integer. and the signal measurement node measures the reference signal to be measured to obtain actual measurement values, and processes the actual measurement values at the M time points based on the configuration information to obtain signal processing results at the M time points; and then feeds back the signal processing results at the M time points to the positioning server. Therefore, when the signal measurement node needs to feed back signal processing results at multiple time points, the method of the present disclosure can be used to determine the signal processing results at each time point, thereby achieving successful feedback of the signal processing results and ensuring stable execution of the positioning process.

The following is an example introduction to the method of the present disclosure:
(1) A positioning measurement result feedback method, applied to a positioning signal measurement node, in response to the measurement feedback result including information at M time sampling points, characterized by quantizing the information at each time sampling point.
   For example, for feedback of channel impulse response, the real and imaginary parts of the measured signal at multiple time sampling points need to be fed back; for feedback of power distribution, the power of the measured signal at multiple time sampling points needs to be fed back.
(2) Based on (1), the quantization granularities at the time sampling points respectively are the same.
(3) Based on (2), the quantization granularity is based on a preset value.
(4) Based on (2), receiving configuration information from a positioning server, where the configuration information includes a determination parameter, and the determination parameter is used to determine the quantization granularity.
(5) Based on (1), the quantization granularities are different for different time sampling points.
(6) Based on (5), receiving a configuration message from the positioning server, where the configuration message includes the quantization granularity corresponding to the time sampling points.
   Specifically, the positioning server can estimate the first path arrival time of the positioning reference signal arriving at the measurement node. For time sampling points near the estimated time, the corresponding quantization granularity is smaller, while for time sampling points outside the range of the first path arrival time, the corresponding quantization granularity can be larger.
(7) Based on (1), in response to the positioning measurement result including measurement results for positioning reference information of N base stations, further characterized by determining the quantization granularity corresponding to each of the N base stations.
(8) Based on (7), the quantization granularities corresponding respectively to the N base stations are the same.
(9) Based on (8), the quantization granularity is determined based on a predefined rule.
(10) Based on (8), receiving configuration information from the positioning server, and determining the quantization granularity based on the configuration information.
(11) Based on (7), the quantization granularities corresponding to the N base stations are different.
(12) Based on (11), receiving a configuration message from the positioning server, where the configuration message includes an independent quantization granularity for each base station.
(13) Based on (1), the feedback of information for a sampling point includes a reference value and offset information, where the information at the reference point can be determined based on the reference value and the offset value. The reference value is at least for 2 time sampling points, and the offset value is for one time sampling point.
(14) Based on (13), quantizing the reference value and the offset value.
(15) Based on (14), the quantization granularities for the reference value and the offset value may be different, where the quantization granularity can be determined based on pre-configuration or based on configuration information.
(16) Based on (15), for different time sampling points of the same base station, the reference values can be different. The quantization granularity can be determined based on pre-configuration or based on configuration information.
(17) Based on (16), for different base stations, the reference values can be different. The quantization granularity can be determined based on pre-configuration or based on configuration information.

FIG. 10 is a schematic structural diagram of a communication apparatus provided by an embodiment of the present disclosure. As shown in FIG. 10, the apparatus can include a processing module and a transceiver module.

The processing module is configured to determine configuration information corresponding respectively to M time points, wherein the configuration information is used to configure processing methods corresponding respectively to the M time points, and M is a positive integer.

The processing module is further configured to measure a reference signal to be measured to obtain actual measurement values.

The processing module is further configured to process, based on the configuration information, the actual measurement values at the M time points to obtain signal processing results at the M time points.

The transceiver module is configured to feed back the signal processing results at the M time points to a positioning server.

In summary, in the communication apparatus provided by the embodiments of the present disclosure, the signal measurement node determines configuration information corresponding respectively to M time points, where the configuration information is used to configure the processing methods corresponding respectively to M time points, and M is a positive integer, and the signal measurement node measures the reference signal to be measured to obtain actual measurement values, and processes the actual measurement values at the M time points based on the configuration information to obtain signal processing results at the M time points; and then feeds back the signal processing results at the M time points to the positioning server. Therefore, when the signal measurement node needs to feed back signal processing results at multiple time points, the method of the present disclosure can be used to determine the signal processing results at each time point, thereby achieving successful feedback of the signal processing results and ensuring stable execution of the positioning process.

In an embodiment of the present disclosure, the determining the configuration information includes at least one of:
determining the configuration information corresponding respectively to the M time points based on a protocol agreement;
determining the configuration information corresponding respectively to the M time points based on a predefinition; or
determining the configuration information corresponding respectively to the M time points based on a transmission from the positioning server.

In an embodiment of the present disclosure, the signal processing results are values obtained by quantizing the actual measurement values; and
the configuration information comprises:
quantization intervals corresponding to the M time points, wherein each time point corresponds to at least one quantization interval; and
quantization results corresponding respectively to the quantization intervals.

In an embodiment of the present disclosure, the processing module is further configured to:
determine, from the quantization intervals corresponding to the M time points, target quantization intervals to which the actual measurement values at the M time points respectively belong; and
determine the quantization results corresponding respectively to the target quantization intervals as the signal processing results at the M time points respectively.

In an embodiment of the present disclosure, the configuration information corresponding to different time points are the same.

In an embodiment of the present disclosure, the configuration information corresponding to different time points are different.

In an embodiment of the present disclosure, in a case where the configuration information corresponding to different time points are different, an interval length of a quantization interval corresponding to a time point within a specific time range is smaller than an interval length of a quantization interval corresponding to a time point outside the specific time range.

In an embodiment of the present disclosure, the specific time range comprises a first path arrival time of the reference signal to be measured arriving at the signal measurement node.

Optionally, in an embodiment of the present disclosure, the processing module is further configured to:
determine reference values corresponding respectively to the M time points, where at least two of the M time points correspond to a same reference value;
determine offset values of the actual measurement values at the M time points relative to the reference values corresponding respectively to the M time points; and
quantize the reference values and the offset values corresponding respectively to the M time points based on the configuration information to obtain the signal processing results at the M time points.

Optionally, in an embodiment of the present disclosure, the configuration information includes:
first quantization intervals corresponding to the reference values corresponding respectively to the M time points, wherein each reference value corresponds to at least one first quantization interval;
quantization results corresponding to the first quantization intervals;
second quantization intervals corresponding to the offset values corresponding respectively to the M time points, wherein each offset value corresponds to at least one second quantization interval; and
quantization results corresponding respectively to the second quantization intervals.

Optionally, in an embodiment of the present disclosure, the processing module is further configured to:
quantize the reference values corresponding respectively to the M time points based on the first quantization intervals and the quantization results corresponding respectively to the first quantization intervals; and
quantize the offset values corresponding respectively to the M time points based on the second quantization intervals and the quantization results corresponding respectively to the second quantization intervals.

Optionally, an interval length of a first quantization interval and an interval length of a second quantization interval corresponding to a same time point are the same or different;
interval lengths of first quantization intervals corresponding to reference values of different time points are the same or different; and
interval lengths of second quantization intervals corresponding to offset values of different time points are the same or different.

Optionally, in an embodiment of the present disclosure, in response to the signal measurement node being a terminal, the processing module is further configured to:
determine the configuration information corresponding respectively to base stations participating in positioning, wherein the configuration information is used to configure the processing methods for the actual measurement values, obtained respectively at the M time points corresponding to a base station participating in positioning, of the reference signal sent by the base station;
measure the reference signal to be measured and sent by the base station to obtain the actual measurement values;
based on the configuration information corresponding to the base stations, process respectively the actual measurement values obtained at the M time points corresponding to the base station, to obtain the signal processing results at the M time points for the base station.

Optionally, in an embodiment of the present disclosure, the base station includes a plurality base stations and the configuration information corresponding to different base stations are the same or different.

Optionally, in an embodiment of the present disclosure, the base station include a plurality base stations and reference values corresponding to time points of different base stations are the same or different, and reference values corresponding to different time points of a same base station are the same or different.

Optionally, in an embodiment of the present disclosure, in response to the signal measurement node being a base station, the processing module is further configured to:
determine the configuration information corresponding to a terminal, wherein the configuration information is used to configure the processing methods for the actual measurement values, obtained respectively at the M time points corresponding to the terminal, of the reference signal sent by the terminal;
measure the reference signal to be measured and sent by the terminal to obtain the actual measurement values;
based on the configuration information corresponding to the terminal, process the actual measurement values at the M time points corresponding to the terminal to obtain the signal processing results at the M time points for the terminal.

FIG. 11 is a schematic structural diagram of a communication apparatus according to an embodiment of the present disclosure. As shown in FIG. 11, the apparatus may include a transceiver module, configured to:
send configuration information corresponding respectively to M time points to a signal measurement node, wherein the configuration information is used to configure processing methods corresponding respectively to the M time points, and M is a positive integer; and
receive signal processing results obtained at the M time points and fed back by the signal measurement node, wherein the signal processing results at the M time points are results obtained by the signal measurement node through processing actual measurement values at the M time points based on configuration information corresponding respectively to the M time points.

In summary, in the communication apparatus provided by the embodiments of the present disclosure, a positioning server sends configuration information corresponding respectively to M time points to a signal measurement node, where the configuration information is used to configure a processing method corresponding respectively to M time points, and M is a positive integer. Additionally, the signal measurement node measures a to-be-measured reference signal to obtain actual measurement values, processes the actual measurement values at the M time points based on the configuration information to obtain signal processing results at the M time points, and feeds back the signal processing results at the M time points to the positioning server. Thus, when the signal measurement node needs to feed back signal processing results at multiple time points, the method of the present disclosure can determine signal processing results at each time point, thereby achieving successful feedback of signal processing results and ensuring stable execution of positioning procedures.

Optionally, in an embodiment of the present disclosure, the signal processing result is a value obtained by quantizing the actual measurement value:
the configuration information includes:
quantization intervals corresponding to the M time points, wherein each time point corresponds to at least one quantization interval; and
quantization results corresponding respectively to the quantization intervals.

Optionally, in an embodiment of the present disclosure, the configuration information corresponding to different time points are the same.

Optionally, in an embodiment of the present disclosure, the configuration information corresponding to different time points are different.

Optionally, in an embodiment of the present disclosure, in a case where the configuration information corresponding to different time points are different, an interval length of a quantization interval corresponding to a time point within a specific time range is smaller than an interval length of a quantization interval corresponding to a time point outside the specific time range.

Optionally, in an embodiment of the present disclosure, the specific time range includes a first path arrival time of the reference signal to be measured arriving at the signal measurement node.

Optionally, in an embodiment of the present disclosure, the configuration information includes:
first quantization intervals corresponding to the reference values corresponding respectively to the M time points, where each reference value corresponds to at least one first quantization interval;
quantization results corresponding to the first quantization intervals;
second quantization intervals corresponding to the offset values corresponding respectively to the M time points, where each offset value corresponds to at least one second quantization interval; and
quantization results corresponding respectively to the second quantization intervals.

Optionally, in an embodiment of the present disclosure, an interval length of a first quantization interval and an interval length of a second quantization interval corresponding to a same time point are the same or different;
interval lengths of first quantization intervals corresponding to reference values of different time points are the same or different; and
interval lengths of second quantization intervals corresponding to offset values of different time points are the same or different.

Optionally, in an embodiment of the present disclosure, in response to the signal measurement node being a terminal, the transceiver module is further configured to
send to the terminal the configuration information corresponding respectively to base stations participating in positioning, where the configuration information is used to configure the processing methods for the actual measurement values, obtained respectively at the M time points corresponding to a base station participating in positioning, of the reference signal sent by the base station.

Optionally, in an embodiment of the present disclosure, the configuration information corresponding to different base stations are the same or different.

Optionally, in an embodiment of the present disclosure, reference values corresponding to time points of different base stations are the same or different, and reference values corresponding to different time points of a same base station are the same or different.

Optionally, in an embodiment of the present disclosure, in response to the signal measurement node being a base station, the transceiver module is further configured to
send the configuration information corresponding to the terminal to base stations participating in positioning respectively, wherein the configuration information is used to configure the processing methods for the actual measurement values, obtained respectively at the M time points corresponding to the terminal, of the reference signal sent by the terminal.

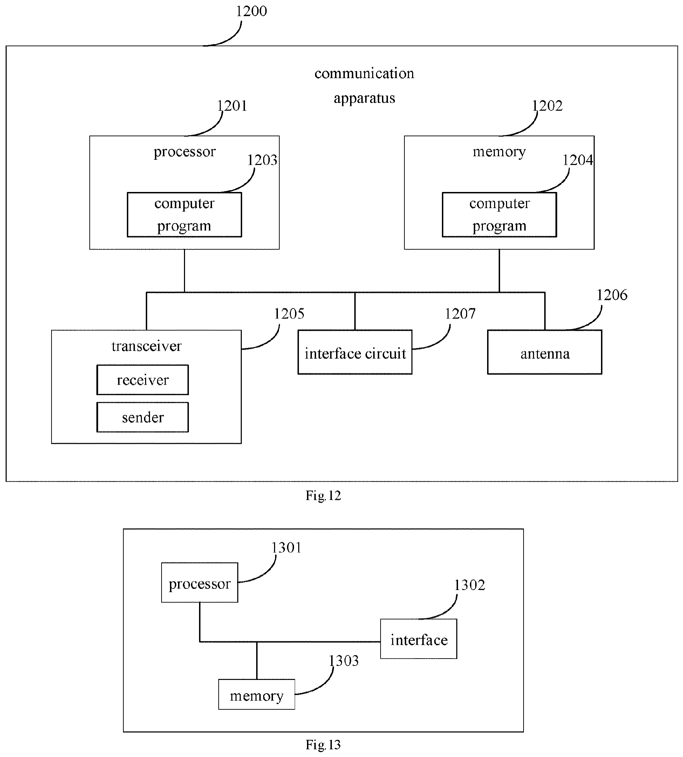

Please refer to FIG. 12. FIG. 12 is a schematic structural diagram of a communication apparatus 1200 according to an embodiment of the present application. The communication apparatus 1200 may be a network device, a terminal, a chip, a chip system, or a processor that supports a network device in implementing the above method, or a chip, a chip system, or a processor that supports a terminal in implementing the above method. The apparatus may be used to implement the method described in the foregoing method embodiments. For details, refer to the description in the foregoing method embodiments.

The communication apparatus 1200 may include one or more processors 1201. The processor 1201 may be a general-purpose processor or a special-purpose processor. For example, it may be a baseband processor or a central processing unit. The baseband processor may be used to process communication protocols and communication data, and the central processing unit may be used to control the communication apparatus (e.g., a base station, a baseband chip, a terminal, a terminal chip, a DU, or a CU), execute computer programs, and process data of the computer programs.

Optionally, the communication apparatus 1200 may further include one or more memories 1202. A computer program 1204 may be stored thereon, and the processor 1201 executes the computer program 1204 to cause the communication apparatus 1200 to perform the method described in the foregoing method embodiments. Optionally, data may also be stored in the memory 1202. The communication apparatus 1200 and the memory 1202 may be provided separately or integrated together.

Optionally, the communication apparatus 1200 may further include a transceiver 1205 and an antenna 1206. The transceiver 1205 may be referred to as a transceiver unit, a transceiver circuit, or the like, and is used to implement a transceiver function. The transceiver 1205 may include a receiver and a transmitter. The receiver may be referred to as a receiver unit, a receiver circuit, or the like, and is used to implement a receiving function. The transmitter may be referred to as a transmitter unit, a transmitter circuit, or the like, and is used to implement a transmitting function.

Optionally, the communication apparatus 1200 may further include one or more interface circuits 1206. The interface circuit 1206 is used to receive a code instruction and transmit it to the processor 1201. The processor 1201 runs the code instruction to cause the communication apparatus 1200 to perform the method described in the foregoing method embodiments.

In an embodiment, the processor 1201 may include a transceiver for implementing receiving and transmitting functions. For example, the transceiver may be a transceiver circuit, an interface, or an interface circuit. The transceiver circuit, interface, or interface circuit for implementing receiving and transmitting functions may be separate or integrated together. The foregoing transceiver circuit, interface, or interface circuit may be used for reading/writing code/data, or for transmitting or transferring signals.

In an embodiment, the processor 1201 may store a computer program 1203. The computer program 1203 runs on the processor 1201 to cause the communication apparatus 1200 to perform the method described in the foregoing method embodiments. The computer program 1203 may be solidified in the processor 1201. In this case, the processor 1201 may be implemented by hardware.

In an embodiment, the communication apparatus 1200 may include a circuit, where the circuit may implement the transmitting or receiving or communication function in the foregoing method embodiments. The processor and transceiver described in the present disclosure may be implemented on an integrated circuit (IC), an analog IC, a radio frequency integrated circuit (RFIC), a mixed-signal IC, an application-specific integrated circuit (ASIC), a printed circuit board (PCB), an electronic device, or the like. The processor and transceiver may also be manufactured using various IC process technologies, such as complementary metal oxide semiconductor (CMOS), N-type metal oxide semiconductor (NMOS), P-type metal oxide semiconductor (PMOS), bipolar junction transistor (BJT), bipolar CMOS (BiCMOS), silicon germanium (SiGe), gallium arsenide (GaAs), and the like.

The communication apparatus in the above embodiments may be a network device or a terminal. However, the scope of the communication apparatus described in the present disclosure is not limited thereto, and the structure of the communication apparatus is not limited by FIG. 12. The communication apparatus may be an independent device or part of a larger device. For example, the communication apparatus may be:
(1) an independent integrated circuit (IC), chip, chip system, or subsystem;
(2) a set of one or more ICs. Optionally, the set of ICs may also include a storage component for storing data and computer programs;
(3) an ASIC, such as a modem (Modem);
(4) a module embeddable in other devices;
(5) a receiver, terminal, smart terminal, cellular phone, wireless device, handset, mobile unit, vehicle-mounted device, network device, cloud device, artificial intelligence device, etc.;
(6) others, etc.

For the case where the communication apparatus may be a chip or a chip system, refer to the schematic structural diagram of the chip shown in FIG. 13. The chip shown in FIG. 13 includes a processor 1301 and an interface 1302. Optionally, there may be one or more processors 1301, and multiple interfaces 1302.

Optionally, the chip further includes a memory 1303, where the memory 1303 is used to store necessary computer programs and data.

Those skilled in the art may also understand that various illustrative logical blocks and steps listed in the embodiments of the present disclosure may be implemented through electronic hardware, computer software, or a combination thereof. Whether such functions are implemented by hardware or software depends on the specific application and design constraints of the overall system. Those skilled in the art may use various methods to implement the described functions for each specific application, but such implementation should not be understood as beyond the scope of the embodiments of the present disclosure.

The present disclosure also provides a computer-readable storage medium having instructions stored thereon. When the instructions are executed by a computer, the functions of any one of the foregoing method embodiments are implemented.

The present disclosure also provides a computer program product. When the computer program product is executed by a computer, the functions of any one of the foregoing method embodiments are implemented.

In the foregoing embodiments, the functions may be implemented entirely or partially by software, hardware, firmware, or any combination thereof. When implemented using software, the functions may be implemented entirely or partially in the form of a computer program product. The computer program product includes one or more computer programs. When the computer programs are loaded and executed on a computer, all or part of the procedures or functions according to the embodiments of the present disclosure are generated. The computer may be a general-purpose computer, a special-purpose computer, a computer network, or another programmable apparatus. The computer programs may be stored in a computer-readable storage medium or transmitted from one computer-readable storage medium to another computer-readable storage medium. For example, the computer programs may be transmitted from a website site, computer, server, or data center to another website site, computer, server, or data center via a wired medium (e.g., coaxial cable, optical fiber, digital subscriber line (DSL)) or a wireless medium (e.g., infrared, radio, microwave, etc.). The computer-readable storage medium may be any available medium that can be accessed by a computer or a data storage device such as a server or data center integrated with one or more available media. The available medium may be a magnetic medium (e.g., floppy disk, hard disk, magnetic tape), an optical medium (e.g., digital video disc (DVD)), or a semiconductor medium (e.g., solid-state drive (SSD)), etc.

Those of ordinary skill in the art may understand that: the first, second, and other numerical labels involved in the present disclosure are merely for convenience of description and are used for distinction, and are not used to limit the scope of the embodiments of the present disclosure, nor do they indicate a sequence.

"At least one" in the present disclosure may also be described as "one or more," and "a plurality of' may be two, three, four, or more. The present disclosure does not impose limitations. In the embodiments of the present disclosure, for a technical feature, expressions such as "first," "second," "third," "A," "B," "C," and "D" are used to distinguish the technical features. The technical features described by "first," "second," "third," "A," "B," "C," and "D" have no sequence or size order.

The correspondence relationships shown in the tables in the present disclosure may be configured or predefined. The values of signals in the tables are merely examples and may be configured as other values. The present disclosure does not limit the correspondence relationships. When configuring the correspondence relationships between configuration information and parameters, it is not necessarily required to configure all correspondence relationships illustrated in the tables. For example, in the tables of the present disclosure, the correspondence relationships shown in some rows may not be configured. Furthermore, appropriate modifications and adjustments may be made to the foregoing tables, such as splitting or merging. The parameter names shown in the headings of the foregoing tables may also be replaced with other names understandable by the communication apparatus, and the parameter values or representations may also be replaced with other values or representations understandable by the communication apparatus. When implementing the foregoing tables, other data structures may be used, such as arrays, queues, containers, stacks, linear lists, pointers, linked lists, trees, graphs, structs, classes, heaps, hash tables, or hash maps.

"Predefined" in the present disclosure may be understood as defined, predefined, stored, pre-stored, pre-negotiated, pre-configured, solidified, or pre-burned.

Those of ordinary skill in the art may appreciate that the units and algorithm steps of the examples described in the embodiments disclosed herein may be implemented by electronic hardware or a combination of computer software and electronic hardware. Whether these functions are performed by hardware or software depends on the specific application and design constraints of the technical solution. Professionals may use different methods for each specific application to implement the described functions, but such implementation should not be considered beyond the scope of the present disclosure.

Those skilled in the art may clearly understand that, for the convenience and conciseness of description, the specific working processes of the systems, apparatuses, and units described above may refer to the corresponding processes in the foregoing method embodiments, and details are not repeated herein.

The foregoing descriptions are merely specific implementations of the present disclosure, but the scope of the present disclosure is not limited thereto. Any person skilled in the art may readily conceive of changes or substitutions within the technical scope disclosed in the present disclosure, which should be covered within the scope of the present disclosure. Therefore, the scope of the present disclosure shall be subject to the scope of the claims.

## Claims

1. A feedback method, performed by a signal measurement node, comprising:
determining configuration information corresponding respectively to M time points, wherein the configuration information is used to configure processing methods corresponding respectively to the M time points, and M is a positive integer;
measuring a reference signal to be measured to obtain actual measurement values;
processing, based on the configuration information, the actual measurement values at the M time points to obtain signal processing results at the M time points; and
feeding back the signal processing results at the M time points to a positioning server.

2. The method according to claim 1, wherein determining the configuration information corresponding respectively to the M time points comprises at least one of:
determining the configuration information corresponding respectively to the M time points based on a protocol agreement;
determining the configuration information corresponding respectively to the M time points based on a predefinition; or
determining the configuration information corresponding respectively to the M time points based on a transmission from the positioning server.

3. The method according to claim 1 or 2, wherein the signal processing results are values obtained by quantizing the actual measurement values; and
the configuration information comprises:
quantization intervals corresponding to the M time points, wherein each time point corresponds to at least one quantization interval; and
quantization results corresponding respectively to the quantization intervals.

4. The method according to claim 3, wherein processing based on the configuration information the actual measurement values at the M time points to obtain the signal processing results at the M time points comprises:
determining, from the quantization intervals corresponding to the M time points, target quantization intervals to which the actual measurement values at the M time points respectively belong; and
determining the quantization results corresponding respectively to the target quantization intervals as the signal processing results at the M time points respectively.

5. The method according to any one of claims 1 to 4, wherein the configuration information corresponding to different time points are the same.

6. The method according to any one of claims 1 to 4, wherein the configuration information corresponding to different time points are different.

7. The method according to claim 6, wherein in a case where the configuration information corresponding to different time points are different, an interval length of a quantization interval corresponding to a time point within a specific time range is smaller than an interval length of a quantization interval corresponding to a time point outside the specific time range.

8. The method according to claim 7, wherein the specific time range comprises a first path arrival time of the reference signal to be measured arriving at the signal measurement node.

9. The method according to claim 1, wherein processing based on the configuration information the actual measurement values at the M time points to obtain the signal processing results at the M time points comprises:
determining reference values corresponding respectively to the M time points, wherein at least two of the M time points correspond to a same reference value;
determining offset values of the actual measurement values at the M time points relative to the reference values corresponding respectively to the M time points; and
quantizing the reference values and the offset values corresponding respectively to the M time points based on the configuration information to obtain the signal processing results at the M time points.

10. The method according to claim 9, wherein the configuration information comprises:
first quantization intervals corresponding to the reference values corresponding respectively to the M time points, wherein each reference value corresponds to at least one first quantization interval;
quantization results corresponding to the first quantization intervals;
second quantization intervals corresponding to the offset values corresponding respectively to the M time points, wherein each offset value corresponds to at least one second quantization interval; and
quantization results corresponding respectively to the second quantization intervals.

11. The method according to claim 10, wherein quantizing the reference values and the offset values corresponding respectively to the M time points based on the configuration information comprises:
quantizing the reference values corresponding respectively to the M time points based on the first quantization intervals and the quantization results corresponding respectively to the first quantization intervals; and
quantizing the offset values corresponding respectively to the M time points based on the second quantization intervals and the quantization results corresponding respectively to the second quantization intervals.

12. The method according to claim 10, wherein
an interval length of a first quantization interval and an interval length of a second quantization interval corresponding to a same time point are the same or different;
interval lengths of first quantization intervals corresponding to reference values of different time points are the same or different; and
interval lengths of second quantization intervals corresponding to offset values of different time points are the same or different.

13. The method according to any one of claims 1 to 12, wherein in response to the signal measurement node being a terminal, determining the configuration information corresponding respectively to the M time points comprises:
determining the configuration information corresponding respectively to a base station participating in positioning, wherein the configuration information is used to configure the processing methods for the actual measurement values, obtained respectively at the M time points corresponding to a base station participating in positioning, of the reference signal sent by the base station;
measuring the reference signal to be measured to obtain the actual measurement values comprises:
measuring the reference signal to be measured and sent by the base station to obtain the actual measurement values;
processing, based on the configuration information, the actual measurement values at the M time points to obtain the signal processing results at the M time points comprises:
based on the configuration information corresponding to the base stations, processing respectively the actual measurement values obtained at the M time points corresponding to the base station, to obtain the signal processing results at the M time points for the base station.

14. The method according to claim 13, wherein the base station comprises a plurality base stations and the configuration information corresponding to different base stations are the same or different.

15. The method according to claim 13, wherein the base station comprises a plurality base stations and reference values corresponding to time points of different base stations are the same or different, and reference values corresponding to different time points of a same base station are the same or different.

16. The method according to any one of claims 1 to 12, wherein in response to the signal measurement node being a base station, determining the configuration information corresponding respectively to the M time points comprises:
determining the configuration information corresponding to a terminal, wherein the configuration information is used to configure the processing methods for the actual measurement values, obtained respectively at the M time points corresponding to the terminal, of the reference signal sent by the terminal;
measuring the reference signal to be measured to obtain the actual measurement values comprises:
measuring the reference signal to be measured and sent by the terminal to obtain the actual measurement values;
processing based on the configuration information the actual measurement values at the M time points to obtain the signal processing results at the M time points comprises:
based on the configuration information corresponding to the terminal, processing the actual measurement values at the M time points corresponding to the terminal to obtain the signal processing results at the M time points for the terminal.

17. A feedback method, performed by a positioning server, comprising:
sending configuration information corresponding respectively to M time points to a signal measurement node, wherein the configuration information is used to configure processing methods corresponding respectively to the M time points, and M is a positive integer; and
receiving signal processing results obtained at the M time points and fed back by the signal measurement node, wherein the signal processing results obtained respectively at the M time points are results obtained by the signal measurement node through processing actual measurement values at the M time points based on configuration information corresponding respectively to the M time points.

18. The method according to claim 17, wherein the signal processing result are values obtained by quantizing the actual measurement values; and
the configuration information comprises:
quantization intervals corresponding to the M time points, wherein each time point corresponds to at least one quantization interval; and
quantization results corresponding respectively to the quantization intervals.

19. The method according to claim 17 or 18, wherein the configuration information corresponding to different time points are the same.

20. The method according to claim 17 or 18, wherein the configuration information corresponding to different time points are different.

21. The method according to claim 20, wherein in a case where the configuration information corresponding to different time points are different, an interval length of a quantization interval corresponding to a time point within a specific time range is smaller than an interval length of a quantization interval corresponding to a time point outside the specific time range.

22. The method according to claim 21, wherein the specific time range comprises a first path arrival time of the reference signal to be measured arriving at the signal measurement node.

23. The method according to claim 17, wherein the configuration information comprises:
first quantization intervals corresponding to the reference values corresponding respectively to the M time points, wherein each reference value corresponds to at least one first quantization interval;
quantization results corresponding to the first quantization intervals;
second quantization intervals corresponding to the offset values corresponding respectively to the M time points, wherein each offset value corresponds to at least one second quantization interval; and
quantization results corresponding respectively to the second quantization intervals.

24. The method according to claim 23, wherein
an interval length of a first quantization interval and an interval length of a second quantization interval corresponding to a same time point are the same or different;
interval lengths of first quantization intervals corresponding to reference values of different time points are the same or different; and
interval lengths of second quantization intervals corresponding to offset values of different time points are the same or different.

25. The method according to any one of claims 17 to 24, wherein in response to the signal measurement node being a terminal, sending the configuration information corresponding respectively to the M time points to the signal measurement node comprises:
sending to the terminal the configuration information corresponding respectively to base stations participating in positioning, wherein the configuration information is used to configure the processing methods for the actual measurement values, obtained respectively at the M time points corresponding to a base station participating in positioning, of the reference signal sent by the base station.

26. The method according to claim 25, wherein the base station comprises a plurality base stations and the configuration information corresponding to different base stations are the same or different.

27. The method according to claim 25, wherein the base station comprises a plurality base stations and reference values corresponding to time points of different base stations are the same or different, and reference values corresponding to different time points of a same base station are the same or different.

28. The method according to any one of claims 17 to 24, wherein in response to the signal measurement node being a base station, sending the configuration information corresponding respectively to the M time points to the signal measurement node comprises:
sending the configuration information corresponding to the terminal to base stations participating in positioning respectively, wherein the configuration information is used to configure the processing methods for the actual measurement values, obtained respectively at the M time points corresponding to the terminal, of the reference signal sent by the terminal.

29. A communication apparatus, comprising:
a processing module configured to:
determine configuration information corresponding respectively to M time points, wherein the configuration information is used to configure processing methods corresponding respectively to the M time points, and M is a positive integer;
measure a reference signal to be measured to obtain actual measurement values; and
process, based on the configuration information, the actual measurement values at the M time points to obtain signal processing results at the M time points;
and
a transceiver module configured to feed back the signal processing results at the M time points to a positioning server.

30. A communication apparatus, comprising a transceiver module configured to:
send configuration information corresponding respectively to M time points to a signal measurement node, wherein the configuration information is used to configure processing methods corresponding respectively to the M time points, and M is a positive integer; and
receive signal processing results obtained at the M time points and fed back by the signal measurement node, wherein the signal processing results at the M time points are results obtained by the signal measurement node through processing actual measurement values at the M time points based on configuration information corresponding respectively to the M time points.

31. A communication apparatus, comprising a processor and a memory, wherein the memory stores a computer program, and the processor executes the computer program stored in the memory to cause the apparatus to perform the method according to any one of claims 1 to 16, or to cause the apparatus to perform the method according to any one of claims 17 to 28.

32. A communication apparatus, comprising a processor and an interface circuit, wherein
the interface circuit is configured to receive a code instruction and transmit the code instruction to the processor; and
the processor is configured to run the code instruction to perform the method according to any one of claims 1 to 16, or to run the code instruction to perform the method according to any one of claims 17 to 28.

33. A computer-readable storage medium having stored therein a computer-executable program that, when executed by a processor, causes the monitoring method according to any one of claims 1 to 16 or any one of claims 17 to 28 to be implemented.
